# NEUE EUROPÄISCHE PATENTSCHRIFT

(11) **EP 2 250 036 B2**
(45) Veröffentlichungstag und Bekanntmachung des Hinweises auf die Entscheidung über den Einspruch: **07.08.2019**
(45) Hinweis auf die Patenterteilung: 16.11.2011
(21) Anmeldenummer: 09716444.6
(22) Anmeldetag: 23.02.2009
(51) Int. Cl.: B60C 23/04

(54) **GEHÄUSEBEFESTIGUNG AN SNAP-IN-VENTIL**
HOUSING FASTENER ON A SNAP-IN VALVE
FIXATION D'UN BOÎTIER À UNE VALVE SNAP-IN

(30) Priorität: 06.03.2008 DE 102008013050
(43) Veröffentlichungstag der Anmeldung: 17.11.2010
(73) Patentinhaber: Huf Hülsbeck & Fürst GmbH & Co. KG, 42551 Velbert (DE)
(72) Erfinder: NAGORA, Andreas, 75015 Bretten (DE); TADELE, Sisay, 71229 Ludwigsburg (DE)
(74) Vertreter: Mommer, Niels
(86) Internationale Anmeldenummer: PCT/DE2009/000239
(87) Internationale Veröffentlichungsnummer: WO 2009/109163

(56) Entgegenhaltungen:
- EP-A- 1 386 759
- EP-A2- 1 452 347
- WO-A-2008/064869
- WO-A1-03/002360
- WO-A1-2008/064869
- WO-A1-2008/103975
- WO-A1-2008/140508
- WO-A1-2008/151267
- WO-A1-2009/002048
- DE-A1- 10 142 354
- DE-A1- 19 613 936
- DE-A1-102006 043 873
- DE-U1- 29 623 466
- FR-A- 2 894 518
- FR-A1- 2 894 518
- US-A1- 2005 087 007
- US-A1- 2006 272 402
- US-A1- 2007 295 076
- US-A1- 2009 007 649

## Beschreibung

Die Erfindung betrifft eine Vorrichtung zum Messen des Reifendruckes in einem Luftreifen eines Fahrzeuges mittels eines vom Reifendruck beaufschlagten Messwertgebers am Felgenbett einer ein Reifenventil aufnehmenden Felge für den Luftreifen, außerhalb dessen dem Messwertgeber ein Empfänger zugeordnet ist, wobei mit dem Reifenventil ein dem Felgenbett zugeordnetes Elektronik- oder Signalgehäuse verbunden ist, welches eine Senderelektronik als Messwertgeber für den Reifendruck enthält und an das Reifenventil durch ein Befestigungselement im wesentlichen im Bereich des Ventilfußteils angeschlossen ist.

Eine Vorrichtung mit den im Oberbegriff des Anspruchs 1 angegebenen Merkmalen ist aus der DE 10 2005 027 002 A1 bekannt. Das Gehäuse der bekannten Vorrichtung hat zwei Flügelplatten, die zwischen sich eine Rinne ausbilden. Zur Befestigung an einem Ventil wird die bekannte Vorrichtung auf den Ventilfuß gelegt, so dass sich die beiden Flügelplatten rechts und links von dem Ventilfuß erstrecken. Anschließend wird ein Befestigungsstift quer durch den Ventilfuß und die Flügelplatten gesteckt.

Die nachveröffentlichte EP 1 914 093 A1 beschreibt eine Vorrichtung mit den im Oberbegriff des Anspruchs 1 angegebenen Merkmalen. An dem Gehäuse dieser Vorrichtung ist ein Befestigungsteil angebracht, das mit einer Nase zwischen zwei Vorsprünge am Ende eines Ventilschafts eingreift und dort mit einem Stift fixiert wird, der durch die Nase und die beiden Vorsprünge senkrecht zur Richtung des Ventilschafts hindurch gesteckt wird.

Die DE 37 34 053 A1 offenbart eine Vorrichtung zum Messen des Reifendruckes in einem Luftreifen eines Fahrzeuges; im Luftreifen ist ein Faltenbalg in etwa achsparalleler Bewegungsrichtung angeordnet und mit einem in Abhängigkeit vom Reifendruck an der Reifenaußenseite achsparallel verschiebbaren Dauermagneten verbunden, der bei Abweichungen vom normalen Reifendruck seine messbare Lage verändert. Als stationärer Aufnehmer außerhalb des Luftreifens wird ein elektronisches Bauelement vorgeschlagen, welches dank des sogenannten Halleffektes jeweils senkrecht zu einem fließenden Strom und einem Magnetfeld eine Spannung erzeugt. Der erwähnte Halleffekt geht davon aus, dass in elektrischen Leitern, die sich in einem homogenen Magnetfeld befinden und in denen dazu senkrecht ein elektrischer Strom fließt, senkrecht zum Magnetfeld sowie senkrecht zum Strom eine Spannungsdifferenz entsteht. Die Größe dieses Effektes ist vom Leitermaterial abhängig und durch die jeweilige Hallkonstante gekennzeichnet.

Bei dem um die Radachse rotierenden Messwertgeber werden durch die auftretende Fliehkraft Reibungskräfte zwischen dem Faltenbalg bzw. dem Halter des Dauermagneten einerseits sowie dem Druckrohr anderseits hervorgerufen, weswegen die zum Messen erforderliche axiale Bewegung des Dauermagneten gestört werden kann, es tritt eine Hysterese auf. Durch die Hysterese wird die Erfüllung der Forderung eines linearen drehzahlunabhängigen Zusammenhanges zwischen dem Reifendruck und der Bewegung des Messwertgebers behindert.

Um das Anbringen des Messwertgebers im Bereich der Felge zu vereinfachen sowie dessen Betriebssicherheit auch beim Wechseln des Fahrzeugreifens zu gewährleisten, wird mit der DE 296 23 466 U1 eine gattungsgemäße Vorrichtung vorgeschlagen. Diese wird dem Fahrzeug herstellbar in Teilen geliefert und von diesem bei der Montage zusammengesetzt. Eine ähnliche Vorrichtung ist aus der EP 1 386 759 A1 bekannt, die mittels eines Rings an dem Ventilfuß befestigt wird. Das Gehäuse ist zur Anpassung an eine gegebene Felgengeometrie in Bezug auf die Ventilachse schwenkbar. Der dabei eingestellte Winkel wird mit einem Bolzen fixiert, der quer zur Ventilachse durch den Ventilfuß gesteckt wird und auf einer Schrägfläche des Gehäuses lastet.

Aus der US 2007/0295076 A1 ist eine Reifenüberwachungseinrichtung zum Aufstecken auf einen Ventilfuß bekannt, die mit einem Clip befestigt wird.

Es ist die Aufgabe der Erfindung, in Weiterentwicklung der Radmodule eine Modifizierung des Systems zur Montageerleichterung anzubieten.

Zur Lösung dieser Aufgabe führt die Lehre des unabhängigen Anspruchs; die Unteransprüche geben vorteilhafte Weiterbildungen an. Zudem fallen in den Rahmen der Erfindung alle Kombinationen aus den in der Beschreibung, der Zeichnung und/oder den Ansprüchen offenbarten Merkmalen.

Erfindungsgemäß ist an einer Vorrichtung zum Messen des Reifendruckes in einem Luftreifen eines Fahrzeuges mittels eines vom Reifendruck beaufschlagten Messwertgebers am Felgenbett einer ein Reifenventil aufnehmenden Felge für den Luftreifen, außerhalb dessen dem Messwertgeber ein Empfänger zugeordnet ist, wobei mit dem Reifenventil ein dem Felgenbett zugeordnetes Elektronik- oder Signalgehäuse verbunden ist, welches eine Senderelektronik als Messwertgeber für den Reifendruck enthält und an das Reifenventil durch ein Befestigungselement im wesentlichen im Bereich des Ventilfußteils angeschlossen ist. Hierbei ist von Vorteil, dass die Vorrichtung z.B. mit Elektroschraubern montiert werden kann, weil das Befestigungselement im wesentlichen frei zugänglich angeordnet ist und somit von oben montiert werden kann.

Die Erfindung sieht vor, dass der Winkel Alpha zwischen Befestigungselement und der Ventilachse in einem Bereich von etwa 30 bis 150 Grad liegen kann. Somit kann für den jeweiligen Felgentyp garantiert werden, dass immer das passende Gehäuse montiert werden kann.

Erfindungsgemäß ist vorgesehen, dass das Elektronik- oder Signalgehäuse ein Aufnahmeelement mit Verdrehschutz zur Aufnahme des Ventilfußteils des Reifenventils aufweist, wobei der Verdrehschutz aus einer einzigen Schlüsselflächen zwischen Ventilfuß und Aufnahmeelement besteht. Hierbei ist von Vorteil, dass der Ventilfuß niemals falsch eingesteckt werden kann, was eine weitere Erleichterung bei der Montage darstellt.

Erfindungsgemäß ist vorgesehen, dass das Befestigungselement als Schraube oder als Stift ausgeführt ist. Vorteilhaft ist hierbei insbesondere, dass es sich um lösbare Verbindungen handelt, die bei einer Wartung bzw. einem Austausch rasch zu wechseln bzw. zu lösen bzw. zu befestigen sind.

Eine weitere vorteilhafte Weiterbildung sieht vor, dass die Luftöffnung im wesentlichen senkrecht zur Ventilachse im Bereich des Ventilfußes angeordnet ist. Hierbei ist von Vorteil, dass die vom Ventil zugeführte Luft unmittelbar mit dem Reifeninneren in Verbindung gelangt, da die Durchtrittsöffnung frei innerhalb des Reifeninneren bzw. des Reifenluftraumes angeordnet ist.

In einer alternativen Ausgestaltung ist vorgesehen, dass der Ventilfuß eine Verdickung aufweist, die als Anschlag dient und ein definiertes Eindringen in das Aufnahmeelement ermöglicht. Auf dem Ventilfuß oder im Aufnahmeelement ist ein federbelasteter Stift oder eine Kugel angeordnet, die auf ihrer korrespondierend gegenüberliegenden Seite-Ventilfuß bzw. Aufnahmeelement- eine bspw. runde bzw. halbkugelige Vertiefung zur Erzeugung einer Schnappverbindung umfasst.

Weitere Vorteile ergeben sich aus den Zeichnungen, diese zeigen in
- Figur 1: Schnitt durch eine Vorrichtung zum Messen des Reifendruckes in einem Luftreifen, die kein Ausführungsbeispiel der Erfindung ist.
- Figur 2: ein Snap-In-Ventil zur Befestigung an einer Vorrichtung nach Figur 1
- Figur 3: ein Metallventil zur Befestigung an einer Vorrichtung nach Figur 1, die kein Ausführungsbeispiel der Erfindung ist

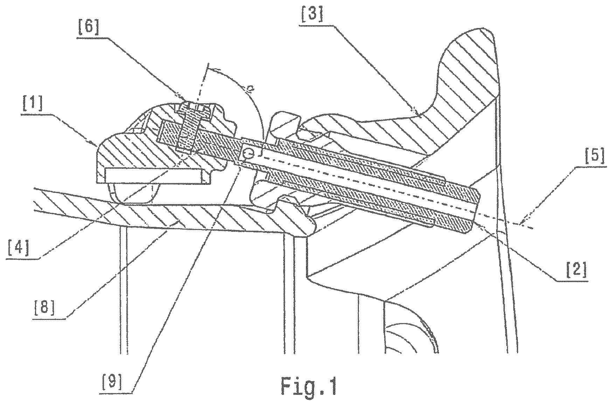

In Figur 1 wird das die Radelektronik enthaltende Gehäuse 1 gezeigt, das in einem Luftreifen im Bereich des Felgenbettes 8 angeordnet ist. Ein Snap-In Ventil 2 ist in der Felge 3 derart angeordnet, dass das im Bereich der Felge 3 und in den nicht ausdrücklich dargestelltem Reifen ragende Ventilfußteil 4 mit dem Gehäuse 1 mittels eines Befestigungselements 6 lösbar verbunden ist. Das Snap-In-Ventil 2 bzw. seine Ventilachse 5 bildet einen Winkel Alpha mit dem Befestigungselement 6. Dieser Winkel Alpha ist abhängig von der Geometrie der Felge und kann je nach Felgentyp eine Variante bilden. Ein Verdrehschutz sorgt dafür, dass der Ventilfuß exakt so in das Gehäuse 1 gesteckt werden kann, dass das Befestigungselement 6, das in diesem Ausführungsbeispiel als Schraube 6 ausgeführt ist, in das im Ventilfuß 4 angeordnete Gewinde 10 zur Herstellung einer lösbaren Verbindung drehbar ist. Ein Luftaustausch findet mittels der Luftöffnung 9 statt, die in diesem Ausführungsbeispiel im wesentlichen senkrecht zur Ventilachse 5 angeordnet ist.

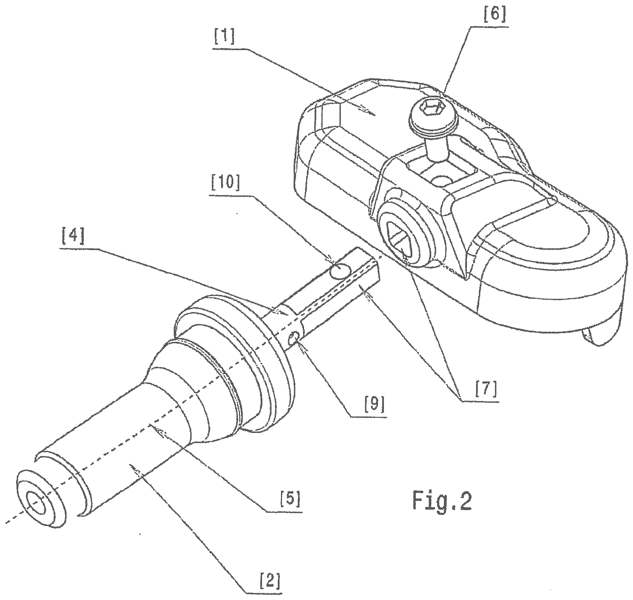

Figur 2 stellt die Radelektronik eines Reifendruckkontrollsystems dar, die im Gehäuse 1 enthalten ist und das in einem Luftreifen vorzugsweise im Bereich des nicht ausdrücklich dargestellten Felgenbettes angeordnet ist. Ein Snap-In Ventil 2 ist in der in dieser Figur nicht dargestellten Felge derart angeordnet, dass das Ventilfußteil 4 mit dem Gehäuse 1 mittels eines Befestigungselements 6 lösbar verbindbar ist. Das Snap-In-Ventil 2 bzw. seine Ventilachse 5 bildet einen Winkel Alpha mit dem Befestigungselement 6. Dieser Winkel Alpha ist abhängig von der Geometrie der Felge und kann je nach Felgentyp eine Variante bilden.

Ein Verdrehschutz, in dieser Ausgestaltung als Vierkant ausgeführt, sorgt dafür, dass der Ventilfuß exakt so in das Gehäuse 1 gesteckt werden kann, dass das Befestigungselement 6, das in diesem Ausführungsbeispiel als Schraube 6 ausgeführt ist, in das im Ventilfuß 4 angeordnete Gewinde 10 zur Herstellung einer lösbaren Verbindung drehbar ist.

Ein Luftaustausch findet mittels der Luftöffnung 9 statt, die in diesem Ausführungsbeispiel im wesentlichen senkrecht zur Ventilachse 5 angeordnet ist, so dass die vom Ventil zugeführte Luft unmittelbar mit dem Reifeninneren in Verbindung gelangt, da die Durchtrittsöffnung frei innerhalb des Reifeninneren bzw. des Reifenluftraumes angeordnet ist.

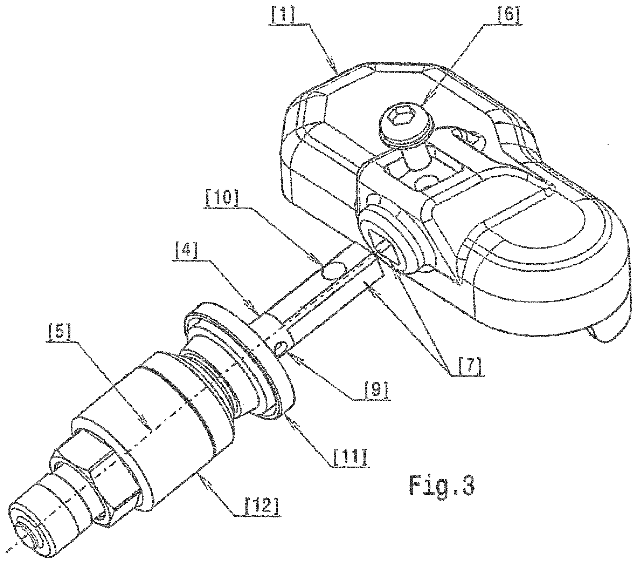

Figur 3 stellt die Radelektronik eines Reifendruckkontrollsystems dar, die im Gehäuse 1 enthalten ist und das in einem Luftreifen vorzugsweise im Bereich des nicht ausdrücklich dargestellten Felgenbettes angeordnet ist. Ein Metallventil 11 ist in der in dieser Figur nicht dargestellten Felge so angeordnet, dass mittels der Überwurfmutter gegen die nicht dargestellte Felge verschraubt wird und dass das Ventilfußteil 4 mit dem Gehäuse 1 mittels eines Befestigungselements 6 lösbar verbindbar ist Das Metallventil 11 bzw. seine Ventilachse 5 bilden einen Winkel Alpha mit dem Befestigungselement 6. Dieser Winkel Alpha ist abhängig von der Geometrie der Felge und kann je nach Felgentyp eine Variante zur einfachen Montage von oben bilden. Ein Verdrehschutz, in dieser Ausgestaltung als Vierkant ausgeführt, sorgt dafür, dass der Ventilfuß exakt so in das Gehäuse 1 gesteckt werden kann, dass das Befestigungselement 6, das in diesem Ausführungsbeispiel als Schraube 6 ausgeführt ist, in das im Ventilfuß 4 angeordnete Gewinde 10 zur Herstellung einer lösbaren Verbindung drehbar ist.

### Bezugszeichenliste

- 1: Gehäuse
- 2: Snap-In-Ventil / Reifenventil
- 3: Felge
- 4: Ventilfußteil
- 5: Ventilachse
- 6: Befestigungselement
- 7: Verdrehschutz
- 8: Felgenbett
- 9: Luftöffnung
- 10: Gewinde
- 11: Metallventil
- 12: Überwurfmutter

## Patentansprüche

1. Vorrichtung zum Messen des Reifendrucks in einem Luftreifen eines Fahrzeugs mittels eines vom Reifendruck beaufschlagten Messwertgebers am Felgenbett (8) einer ein Reifenventil (2) aufnehmenden Felge (3) für den Luftreifen, außerhalb dessen dem Messwertgeber ein Empfänger zugeordnet ist,
mit
einem Elektronik- oder Signalgehäuse (1), welches eine Senderelektronik als Messwertgeber für den Reifendruck enthält, und
einem Befestigungselement (6) in Form einer Schraube oder eines Stifts, durch welches das Elektronik- oder Signalgehäuses (1) mit einem Ventilfuß (4) verbunden ist,
wobei der Winkel (α) zwischen dem Befestigungselement (6) und der Ventilachse (5) in einem Bereich von 30° bis 150° liegt
**dadurch gekennzeichnet, dass**
der Ventilfuß (4) in das Elektronik- oder Signalgehäuse (1) gesteckt ist und das Elektronik- oder Signalgehäuse (1) ein Aufnahmeelement mit Verdrehschutz (7) zur Aufnahme des Ventilfußteils (4) des Reifenventils(2) aufweist, wobei der Verdrehschutz aus einer einzigen Schlüsselfläche besteht, so dass der Ventilfuß (4) niemals falsch eingesteckt werden kann.

2. Vorrichtung zum Messen des Reifendruckes in einem Luftreifen eines Fahrzeuges nach Anspruch 1, **dadurch gekennzeichnet, dass** das Ventil eine Luftöffnung (9) aufweist, die im wesentlichen senkrecht zur Ventilachse (5) im Bereich des Ventilfußes angeordnet ist. (3)

## Claims

1. A device for measuring tire pressure in a pneumatic tire of a motor vehicle by means of a sensor exposed to the tire pressure on the rim well (8) of a rim (3), which accommodates a tire valve (2) for the pneumatic tire, outside of which a receiver is assigned to the sensor, comprising
an electronics or signal housing (1) containing the sensor with transmission electronics as the sensor, and
a fastening element (6) in the form of a bolt or pin for connecting the electronics or signal housing (1) with a valve base (4),
wherein the angle (α) between the fastening element (6) and the valve axis (5) is in a range of 30° to 150°, **characterized in that**
the valve base (4) is inserted into the electronics or signal housing (1) and the electronics or signal housing (1) comprises a receiving element having a rotation lock (7) for receiving the valve base (4) of the tire valve (2), wherein the rotation lock comprises a single flat such that the valve base (4) can never be inserted incorrectly.

2. The device for measuring tire pressure in a pneumatic tire of a motor vehicle according to one or more of the aforementioned claims, the valve has an air opening (9) that is situated substantially perpendicularly to the valve axis (5) in the region of the valve base (4).

## Revendications

1. Dispositif de mesure de pression de pneu dans un pneumatique de véhicule à l'aide d'un codeur de valeurs de mesure sollicité par la pression du pneu au niveau du lit de jante (8) d'une jante (3) recevant une soupape de pneu (2) pour le pneumatique, en dehors de lequel un récepteur est associé au codeur de valeurs de mesure,
avec
un boîtier électronique ou d'un boîtier de signaux (1), qui comprend une électronique d'émission servant du codeur de valeurs de mesure de pression de pneu, et
un élément de fixation (6) sous forme de vis ou de goupille, par lequel le boîtier électronique ou le boîtier de signaux (1) est relié à un pied de soupape (4),
où l'angle (α) entre l'élément de fixation (6) et l'axe de soupape (5) est dans une fourchette de 30° à 150°,
**caractérisé en ce que** le pied de soupape (4) est inséré dans le boîtier électronique ou le boîtier de signaux (1) et le boîtier électronique ou le boîtier de signaux (1) présente un élément de réception avec système de protection contre la rotation (7) pour recevoir la partie pied de soupape (4) du soupape de pneu (2), où la systéme protection contre la rotation consiste d'une seule surface de clé, de sorte que le pied de soupape (4) ne peut jamais être inséré incorrectement.

2. Dispositif de mesure de pression de pneu dans un pneumatique de véhicule selon une ou plusieurs des revendications précédentes, **caractérisé en ce que** la soupape (9) présente une ouverture à l'air libre (9), disposée plus ou moins perpendiculaire à l'axe de soupape (5) dans la zone du pied de soupape.
